# EUROPEAN PATENT SPECIFICATION

(11) **EP 1 826 501 B1**
(45) Date of publication and mention of the grant of the patent: **27.12.2017**
(21) Application number: 05793594.2
(22) Date of filing: 12.10.2005
(51) Int. Cl.: F24F 13/28, F24F 3/16, B01D 46/00, B01D 46/48

(54) **AIR CONDITIONING APPARATUS PROVIDED WITH INDOOR UNIT HAVING AIR FILTER AUTOMATIC CLEANING FUNCTION**
MIT EINER INNENRAUMEINHEIT MIT AUTOMATISCHER LUFTFILTERREINIGUNGSFUNKTION AUSGESTATTETE KLIMAANLAGE
APPAREIL DE CLIMATISATION POURVU D'UNE UNITE D'INTERIEUR AYANT UNE FONCTION DE NETTOYAGE AUTOMATIQUE DE FILTRE A AIR

(30) Priority: 27.10.2004 JP 2004311774
(43) Date of publication of application: 29.08.2007
(73) Proprietor: Panasonic Intellectual Property Management Co., Ltd., Osaka-shi, Osaka 540-6207 (JP)
(72) Inventor: SUGIO, Takashi c/o Matsushita Electric Industrial Co., Ltd, Osaka 571-8501 (JP); SHIMIZU, Tsutomu, c/o Matsushita Electric Industrial Co., Ltd, Osaka 571-8501 (JP)
(74) Representative: Gill Jennings & Every LLP
(86) International application number: PCT/JP2005/018763
(87) International publication number: WO 2006/046404

(56) References cited:
- EP-A- 1 376 024
- EP-A1- 1 927 813
- JP-A- 9 014 744
- JP-A- 9 184 656
- JP-A- 2002 340 395
- JP-A- 2004 113 896
- JP-A- 2004 156 794
- JP-U- 63 111 917

## Description

### Technical Field

The present invention relates to an air conditioner having a function of automatically cleaning an air filter that is disposed adjacent to air intake perforations in an indoor unit.

### Background Art

The indoor unit of the conventional air conditioner requires an air filter to be removed from a front grille of an indoor unit housing for cleaning of the air filter and then to be insert into the front grille after the air filter has been cleaned.

However, considering that the indoor unit is positioned at a high level within a house room, removal and reinsertion of the air filter are not easy for aged persons and women to do. Therefore, the cleaning of the air filter itself is quite soften given a wide berth, leaving the air conditioner to be operated for a substantial period of time, without paying attention to how the energy saving and the living comfortability are sacrificed.

In order to alleviate the foregoing problem, the air conditioner having a filter cleaning mechanism such as shown in Fig. 7 has been suggested (see, for example, Patent Document 1).

The indoor unit of the air conditioner disclosed in the patent document referred to above includes an air flow passage extending from air intake perforations 2, defined in front upper and top portions of the indoor unit housing, to a blow-off opening 3 defined in a front lower portion of the indoor unit housing. An air filter 4, a heat exchanger 6 and a circulating fan 5 are disposed on that air flow passage, and a filter cleaning device 9 is slidably mounted on the air filter 4. This filter cleaning device 9 includes a filter feeding means 10 for intermittently feeding the air filter 4 along an inner side thereof, a dust removing means 11 for removing dust from the air filter 4, and a dust collecting box 12 for accumulating dust particles therein.

In the construction described above, as the dust removing means 11 moves along the air filter 4, dust particles caught by the air filter 4 are sucked and then transported to the dust collecting box 12. After one transverse zone of the air filter 4 has been so cleaned, the air filter 4 is intermittently fed in a direction perpendicular to the direction of movement of the dust removing means 11 so that the dust removing means 11 can sweep the next adjacent transverse zone of the air filter 4. By repeating this coordinated movement of the air filter 4 and the dust removing means 11, a substantially entire surface of the air filter 4 can be cleaned. • Patent Document 1: Japanese Laid-Open Patent Publication No. 2002-340395 Furthermore, EP-A-1376024 discloses an air conditioner with the features of the preamble of claim 1.

### Disclosure of the Invention

### (Problem to be Solved by the Invention)

However, Patent Document 1 referred to above is silent as to where the air filter so intermittently moved goes. It may be thought of the possibility that the air filter 4 may emerge out of the indoor unit housing and, if this is the case, the air filter 4 not only is unsightly, but may collide with or hook a nearby furniture and/or curtains.

It may be also thought of the possibility that the air filter 4 may be wound up in an upper or lower region of the indoor unit housing. In such case, the use would be required of a winding device of a large size, which leads to increase of the size of the indoor unit housing.

The foregoing problems and inconveniences may be equally found even if the air filter is moved leftwards or rightwards, not upwards or downwards.

The present invention has been devised with a view to substantially eliminating the foregoing problems and inconveniences and is intended to provide an air conditioner equipped with a good-for-looking filter cleaning device capable of assuredly accomplishing the filter cleaning.

### (Means for Solving the Problems)

In accomplishing the above and other objectives, the present invention provides an air conditioner having an indoor unit, which includes an indoor unit housing accommodating therein a heat exchanger and a circulating fan for blowing air heat exchanged by the heat exchanger into a house room. An air filter, the heat exchanger and the circulating fan are accommodated within an air flow passage fluid connecting between air intake perforations and an air blow-off opening, both defined in the indoor unit housing. A dust collecting unit is disposed in the indoor unit housing for collecting dust particles removed from the air filter. The air filter is divided into two filter members in a direction conforming to a direction of movement thereof, and the two filter members are reciprocatingly passed across the dust collecting unit such that the one filter is vertically or horizontally movable while the other filter is movable in a direction opposite to the moving direction of the one filter.

The dust collecting unit and a dust discharge fan disposed inside the indoor unit housing altogether constitute a dust removing means. The dust collecting unit may be an elongated dust collecting receptacle extending in a direction perpendicular to the direction of movement of the filter members and having an air transport passage defined therein for transporting dust particles together with a current of air flowing in a direction lengthwise thereof. In such case, the dust collecting unit and the dust discharge fan may be communicated with each other.

The dust collecting unit may include a dust separating member for separating dust particles from the air filter, and the dust separating member is disposed in a portion thereof where the air filter passes. In this case, the dust collecting unit preferably has an opening defined at a location adjacent one end thereof opposite to a junction with the dust discharge fan with respect to a longitudinal direction thereof. Also, the dust collecting unit preferably has a plurality of transit slots through which the filter members pass, and a plurality of closure members are provided for closing the respective transit slots during discharge of the dust particles.

The dust collecting unit may have a dust suction port open towards the filter members for sucking the dust particles.

### (Effects of the Invention)

According to the present invention, the air filter is divided into a plurality of filter members in a direction of movement thereof, and arrangement has been made so that the filter members can be reciprocatingly moved past the dust collecting unit. Accordingly, each of the filter members can have a reduced length as measured in a direction conforming to the direction of movement of each filter member, and a storage space for accommodating the respective filter member so moved can easily be formed inside the indoor housing unit. Also, even though each of the filter members is moved, any part of each of the filter members does not protrude outwardly from the indoor unit housing and, therefore, not only can the air conditioner present a good appearance, but no part of each filter member collide with or hook a nearby furniture and/or curtains.

Also, since the dust collecting unit and a dust discharge fan disposed inside the indoor unit housing altogether constitute a dust removing means, the dust particles collected within the dust collecting unit can be automatically discharged out of the dust collecting unit.

Also, since the dust collecting unit is comprised of an elongated dust collecting receptacle extending in a direction perpendicular to the direction of movement of the filter members and having an air transport passage defined therein for transporting dust particles, removed from the filter members, together with a current of air flowing in a direction lengthwise thereof, a steam of air flowing from the air intake perforations towards the heat exchanger is in no way hampered and, at the same time, the dust particles collected can easily be transported to the dust discharge fan.

In addition, since the dust collecting unit and the dust discharge fan are communicated with each other, the interior of the dust collecting unit can be held under a negative pressure during the operation of the dust discharge fan and, therefore, even though any air leakage occurs in the dust collecting unit, not only can the dust particles be easily collected by the dust collecting unit without allowing the dust particles to blow away from the dust collecting unit, but also an undesirable fall of the dust particles from the air conditioner indoor unit to the outside thereof can be minimized.

Furthermore, since the dust collecting unit includes a dust separating member, disposed in a portion thereof where the air filter passes, for separating dust particles from the air filter, the air filter can be cleaned over the entire surface thereof with the dust particles rubbed off therefrom into the dust collecting unit.

Since in the present invention the dust collecting unit has an opening defined at a location adjacent one end thereof opposite to a junction with the dust discharge fan with respect to a longitudinal direction thereof, when the dust particles within the dust collecting unit are to be discharged out of the dust collecting unit by means of the dust discharge fan, they can be transported by a current of air of a large air volume at a uniform velocity over the entire length of the dust collecting unit and, therefore, the assured discharge of the dust particle can be accomplished.

Also, since the dust collecting unit has a plurality of transit slots through which the filter members pass, along with a plurality of closure members provided for closing the respective transit slots during discharge of the dust particles, leakage of the dust particles from the dust collecting unit can be minimized to accomplish an assured discharge of the dust particles.

If the dust collecting unit is formed with a dust suction port open towards the filter members for sucking the dust particles, the dust particles can be sucked into the dust collecting unit, allowing the air filter to be easily cleaned over the entire surface thereof.

### Brief Description of the Drawings

Fig. 1 is a schematic perspective view of an indoor unit of an air conditioner according to a first embodiment of the present invention;
Fig. 2 is a vertical sectional view of the indoor unit shown in Fig. 1;
Fig. 3 is explanatory diagrams showing the operation of an air filter provided in the indoor unit shown in Fig. 1, (a) showing the air filter held in position ready to move, and (b) showing the air filter held in position completing the movement;
Fig. 4 is a schematic perspective view of the indoor unit of the air conditioner according to a second embodiment of the present invention;
Fig. 5 is a perspective view of a dust suction mechanism employed in the indoor unit shown in Fig. 4;
Fig. 6 is an explanatory diagram showing the operation of the air filter provided in the indoor unit shown in Fig. 4; and

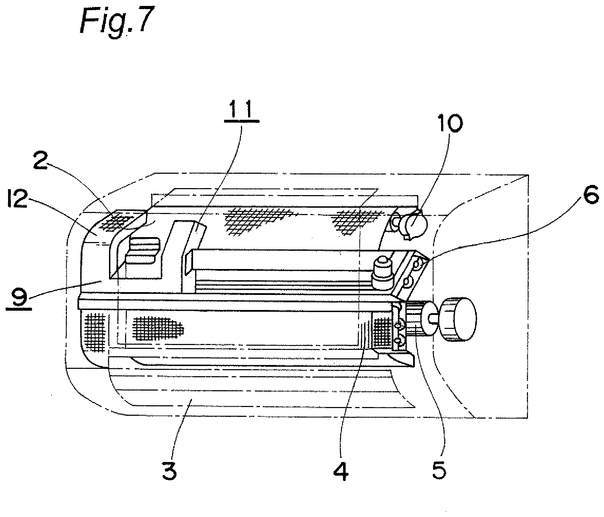

Fig. 7 is a schematic perspective view of the indoor unit of the conventional air filter.

### (Reference Numerals)

- 1: Indoor unit housing
- 2: Air intake perforations
- 3: Air blow-off opening
- 4A, 4B: Air filter
- 5: Circulating fan
- 6: Heat exchanger
- 111: Dust removing means
- 113: Dust collecting receptacle
- 114: Dust discharge fan
- 115: Suction duct
- 117: Transit slot
- 118A, 118B: Brush for the air filter
- 119: Connecting port
- 120A, 120B: Filter drive roller
- 121A, 121B: Filter guide
- 122: Air inlet port
- 123: Rib
- 204A, 204B: Air filter
- 211: Dust removing means
- 213: Dust collecting receptacle
- 214: Dust discharge fan
- 215: Suction duct
- 216: Suction port drive motor
- 217: Dust suction port
- 218: Film
- 219: Connecting port
- 220A, 220B: Filter drive roller
- 221: Guide

### Best Mode for Carrying out the Invention

Hereinafter, embodiments of the present invention will be described with reference to the accompanying drawings.

### Embodiment 1

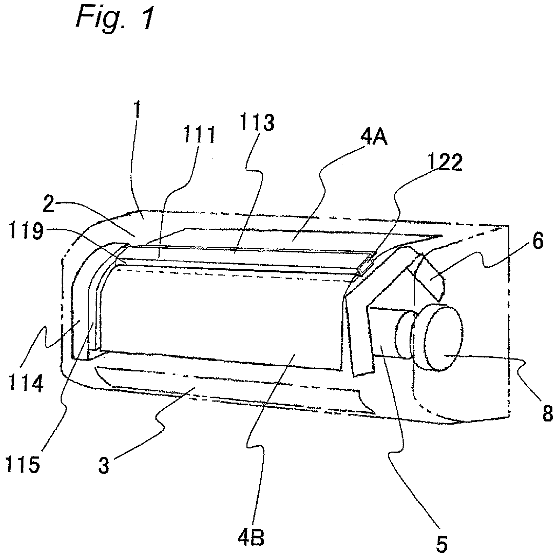

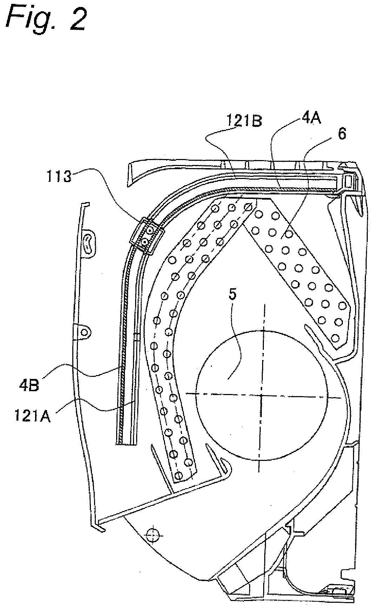

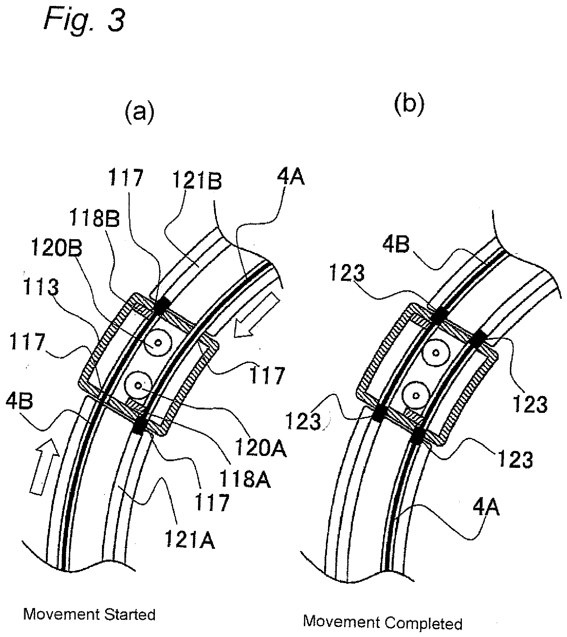

Fig. 1 illustrates a perspective view of an indoor unit of an air conditioner according to a first embodiment of the present invention, Fig. 2 is a vertical sectional view of the indoor unit, and Fig. 3 is schematic diagrams explanatory of the movement of an air filter used in the indoor unit.

As shown in Fig. 1, a housing 1 of the indoor unit has air intake perforations 2 defined in a region ranging from a front surface to a top surface, with an air blow-off opening 3 defined in a lower region of the housing 1. An air flow passage extending between the air intake perforations 2 and the air blow-off opening 3 accommodates therein two filter members 4A and 4B for removing coarse dust particles afloat in the air, a circulating fan 5 drivingly coupled with a fan motor 8, and a heat exchanger 6.

A dust removing means 111 includes an elongated dust collecting receptacle 113 extending widthwise of the indoor unit housing 1 at a location upstream of the upper and lower filter members 4A and 4B with respect to the direction of flow of air from the air intake perforations 2 towards the air blow-off opening 3 and generally intermediate between those filter members 4A and 4B, a dust discharge fan 114 arranged within a space at one lateral end of the indoor unit housing 1, and a suction duct 115 fluid connecting between the dust collecting receptacle 113 and the dust discharge fan 114.

As shown in Figs. 2 and 3, the dust collecting receptacle 113 is of a structure having a transit slots 117 defined therein for passage of the upper and lower filter members 4A and 4B therethrough, respectively, and is provided with filter feed rollers 120A and 120B, drivingly coupled with associated filter feed motors, for moving the corresponding upper and lower filter members 4A and 4B and also with brushes 118A and 118B serving as dust separating members for rubbing dust particles off from the associated filter members 4A and 4B and into the dust collecting receptacle 13.

The dust collecting receptacle 113 has one of its opposite ends formed as a connecting port 119 that is fluid connected with the suction duct 115, the opposite end thereof being left open to define an air inlet port 122. This dust collecting receptacle 113 also has a transport passage defined therein so as to communicate between the air inlet port 122 and the connecting port 119 to transport the dust particles by an air flowing therethrough.

Each of the filter members 4A and 4B is provided with a plurality of ribs or closure members 123 positioned in the proximity to opposite ends thereof to close gaps between the transit slots 117 and the filter members 4A and 4B. That is, each of the filter members 4A and 4B has a rib 123 mounted on one end thereof (a lower end of the upper filter member 4A or an upper end of the lower filter member 4B) and two ribs 123 mounted on the other end thereof (an upper end of the upper filter member 4A or a lower end of the lower filter member 4B) so as to be spaced a predetermined length.

The operation of the dust removing means 111 of the structure described hereinabove will now be described.

When the filter feed roller 120A is driven in a clockwise direction as viewed in Fig. 3, the upper filter member 4A is transported downwardly along a filter guide 121A, and as the upper filter member 4A is so transported downwardly, the brush 118A rubs dust particles off from the upper filter member 4A then moving downwards. The dust particles so removed from the upper filter member 4A is collected within the dust collecting receptacle.

Upon completion of the downward travel of the upper filter member 4A, the transit slots 117, through which the upper filter member 4A extends, are closed by the two ribs 123.

Similarly, when the filter feed roller 120B is driven in a clockwise direction, the lower filter member 4B is transported upwardly along a filter guide 121B, and as the lower filter member 4B is so transported upwardly, the brush 118B rubs dust particles off from the lower filter member 4B then moving upwards. The dust particles so removed from the lower filter member 4B is collected within the dust collecting receptacle.

Upon completion of the downward travel of the lower filter member 4B, the transit slots 117, through which the lower filter member 4B extends, are closed by the two ribs 123, thereby sealing, together with the ribs 123 on the upper filter member 4A, the dust collecting receptacle 113.

In this condition, when the dust discharge fan 114 is driven, a current of air is induced within the dust collecting receptacle 113, flowing from the air inlet port 122 towards the dust discharge fan 114 through the connecting port 119 and then through the suction duct 115 and then towards an outdoor space. The dust particles collected within the dust collecting receptacle 113 in the manner described previously are transported by such current of air and are eventually discharged to the outdoor space.

Thereafter, the filter feed rollers 120A and 120B are reversed in their direction of rotation, that is, driven counterclockwise to return the filter members 4A and 4B to the respective initial positions, thereby completing an automatic cleaning of the filter members 4A and 4B, with the air conditioner held in position ready to be restarted subsequently.

In the foregoing embodiment, reference has been made to the design, in which the dust particles collected within the dust collecting receptacle 113 can be discharged to the outdoor space by means of the dust discharge fan 114. However, if the dust collecting receptacle is so designed as to be closable, the dust collecting receptacle 113 can be opened in readiness for cleaning at any desired time. Even in this case, the air conditioner indoor unit can remain pleasant to look during the cleaning of the filter members.

It is to be noted that the dust discharge fan 114, although shown as positioned downstream of the dust collecting receptacle 113, may be disposed upstream of the dust collecting receptacle 13.

It is also to be noted that although the filter members 4A and 4B has been shown and described as positioned one above the other, they may be positioned in side-by-side relation with respect to the widthwise direction of the air conditioner indoor unit, in which case the dust collecting receptacle 113 has to be disposed so as to extend vertically at a location substantially intermediate of the width of the air conditioner indoor unit.

### Embodiment 2

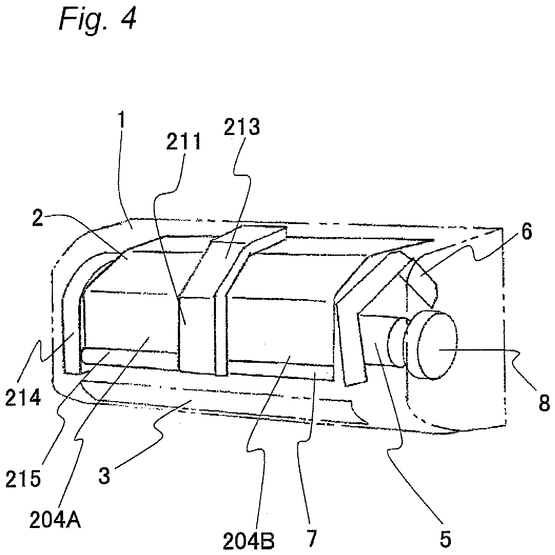

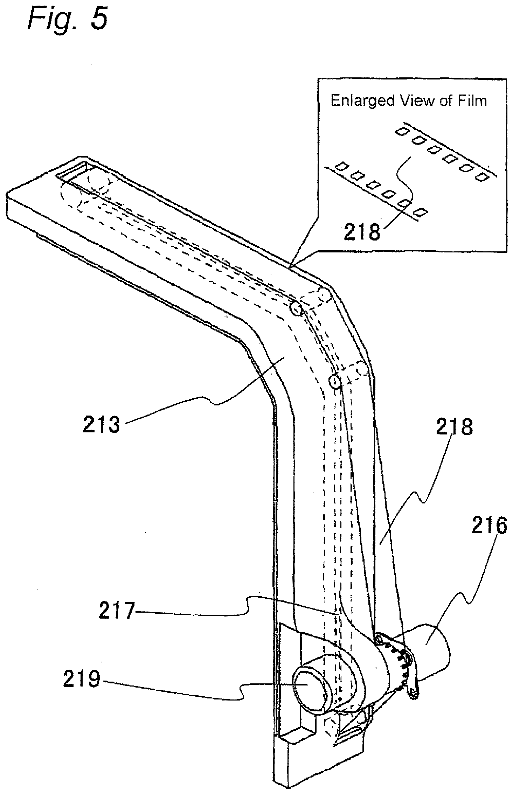

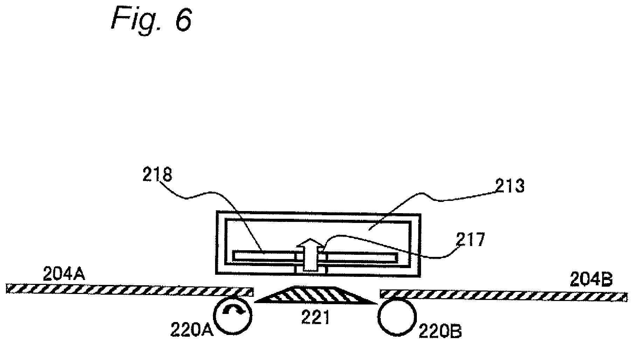

Fig. 4 illustrates a perspective view of the indoor unit of the air conditioner according to a second embodiment of the present invention, Fig. 5 is a perspective view of the dust collecting receptacle, and Fig. 6 is an explanatory diagram showing the operation of the filter members.

It is to be noted that in the description that follows, the details of component parts similar to those described above in connection with the first embodiment are not reiterated.

As shown in Fig. 4, the dust removing means 211 includes an elongated dust collecting receptacle 213 extending vertically at a location substantially intermediate of the width of the air conditioner indoor unit, a dust discharge fan 214 arranged within a space at one lateral end of the indoor unit housing 1, and a suction duct 215 fluid connecting between the dust collecting receptacle 213 and the dust discharge fan 214. The dust collecting receptacle 213 has its interior defining a transport passage through which dust particles can be transported by a current of air in a direction lengthwise of the dust collecting receptacle 213.

As shown in Fig. 5, the dust collecting receptacle 213 includes an endless film 218 having a dust suction port 217 defined therein at a portion confronting the filter members 204A and 204B, and a suction port drive motor 216 for driving the endless film 218 to slidingly reposition the dust suction port 217. When the suction port drive motor 216 is driven, the dust suction port 217 can be repositioned in a vertical direction relative to the filter members 204A and 204B. The dust collecting receptacle 213 is fluid connected with the suction duct 215 through a connecting port 219.

Referring now to Fig. 6, filter feed rollers 220A and 220B, associated with the left and right filter members 204A and 204B, are positioned rearwardly of those filter members 204A and 204B. Those filter feed rollers 220A and 220B are drivingly coupled with respective filter feed motors. Positioned intermediate between the filter feed rollers 220A and 220B is a guide 221 for guiding the left and right filter members 204A and 204B one at a time.

The dust removing means 211 of the above-described construction operates in the following manner.

The left filter member 204A is, when the associated filter feed roller 220A is driven clockwise in Fig. 6, fed rightwards, riding over the filter guide 221 that is positioned rearwardly of the dust collecting receptacle 213. During the left filter member 204A moving over the filter guide 221, the filter member 204A is held in sliding contact with the dust collecting receptacle 213.

In this condition, dust particles caught by the left filter member 204 are, as the dust suction port 217 is moved, sucked through the dust suction port 217 and are subsequently transported to the suction fan 214 through the suction duct 215 before they are discharged to the outdoor space.

After the dust suction port 217 has moved from a lower side edge towards an upper side edge of the left filter member 204A, the filter feed roller 220A is further driven to move the left filter member 204 rightwards so that the filter member 204A can be sequentially cleaned.

Upon completion of a cleaning of the left filter 204A to a right end thereof, the filter feed roller 220A is reversed in its direction of rotation to return the left filter 104A to the initial position and, in a manner substantially similar to that described above, the filter feed roller 220A is operated to clean the right filter member 204B. In this way, the left and right filter members 204A and 204B can be successively cleaned with the dust particles completely removed.

It is to be noted that although the filter members 204A and 204B have been shown and described as positioned in side-by-side relation with respect to the widthwise direction of the air conditioner indoor unit, they may be positioned one above the other with respect to a vertical direction with the dust collecting receptacle 213 laid horizontally so as to extend widthwise of the indoor unit housing 1.

In describing any one of the foregoing first and second embodiments, the air filter has been divided into two filter members in a direction conforming to the direction of movement thereof that are cleaned by the single dust collecting receptacle 113 or 213. However, the air filter may be divided into three or more filter members in a direction conforming to the direction of movement thereof and, in correspondence therewith, a plurality of dust collecting receptacles may be used to clean those filter members. Even in this case, not only can effects similar to those brought about by any one of the first and second embodiments be obtained, but the length of time required to complete the cleaning of the air filter can advantageously be reduced.

Also, when it comes to the discharge of the dust by means of the dust discharge fan 114 or 214, the dust removed from the air filter may not be discharged to the outdoor space, but a filter or the like for recovering the removed dust may be disposed downstream of the dust collecting receptacle 113 or 213.

In addition, the dust collecting receptacle 113 or 213 has been shown and described as utilizing the brushes and the suction to remove dust particles from the filter members. However, the use may be made of any other dust collecting means such as, for example, a rotary rod of an oval sectional shape operable to beat the filter members to separate dust particles therefrom and, even in this case, the air conditioner indoor unit can remain pleasant to look during the cleaning of the filter members.

### Industrial Applicability

According to the present invention, since the air filter is divided into a plurality of filter members in a direction conforming to the direction of movement thereof and since even though each of those filter members is moved, none of those filter members then moved runs out of the indoor unit housing, the present invention can be applied not only to the air conditioner, but also a filter cleaning device utilized in any other device including a fan and a filter, which requires an appealing appearance.

## Claims

1. An air conditioner having an indoor unit, which includes an indoor unit housing (1) accommodating therein a heat exchanger (6) and a circulating fan (5) for blowing air heat exchanged by the heat exchanger (6) into a house room, said air conditioner comprising:
an air filter, the heat exchanger (6) and the circulating fan (5) accommodated within an air flow passage fluid connecting between air intake perforations (2) and an air blow-off opening (3), both defined in the indoor unit housing (1); and
a dust collecting unit disposed in the indoor unit housing (1) for collecting dust particles removed from the air filter;
charaterised in that:
the air filter is divided into two filter members (4A,4B,204A,204B) in a direction conforming to a direction of movement thereof, and the two filter members (4A,4B,204A,204B) are reciprocatingly passed across the dust collecting unit such that the one filter is vertically or horizontally movable while the other filter is movable in a direction opposite to the moving direction of the one filter.

2. The air conditioner as claimed in Claim 1, further comprising a dust discharge fan (114, 214) disposed inside the indoor unit housing (1), wherein the dust collecting unit and the dust discharge fan (114, 214) constitute a dust removing means (111, 211).

3. The air conditioner as claimed in Claim 2, wherein the dust collecting unit is an elongated dust collecting receptacle (113, 213) extending in a direction perpendicular to the direction of movement of the filter members (4A, 413₁⁻ 204A, 20413) and having an air transport passage defined therein for transporting dust particles together with a current of air flowing in a direction lengthwise thereof.

4. The air conditioner as claimed in Claim 2, wherein the dust collecting unit and the dust discharge fan (114, 214) are communicated with each other.

5. The air conditioner as claimed in any one of Claims 1 to 4, wherein the dust collecting unit comprises a dust separating member (118A, 1188) for separating dust particles from the air filter, and that the dust separating member (118A, 118B) is disposed in a portion of the dust collecting unit where the air filter passes.

6. The air conditioner as claimed in Claim 5, wherein the dust collecting unit has an opening defined at a location adjacent one end thereof opposite to a junction with the dust discharge fan (114, 214) with respect to a longitudinal direction thereof.

7. The air conditioner as claimed in Claim 5, further comprising a plurality of closure members (123), wherein the dust collecting unit has a plurality of transit slots (117) through which the filter members (4A, 413; 204A, 204B) pass, and the plurality of closure members (123) close the respective transit slots (117) during discharge of the dust particles.

8. The air conditioner as claimed in any one of Claims 1 to 4, wherein the dust collecting unit has a dust suction port (217) open towards the filter members (4A, 413; 204A, 20413) for sucking the dust particles.

## Patentansprüche

1. Klimaanlage mit einer Innenraumeinheit, die ein Innenraumeinheitsgehäuse (1) beinhaltet, darin einen Wärmeaustauscher (6) und einen zirkulierenden Lüfter (5) aufnehmend, um Luft, die durch den Wärmeaustauscher (6) ausgetauscht worden ist, in ein Hauszimmer zu blasen, wobei die Klimaanlage Folgendes umfasst:
einen Luftfilter, den Wärmeaustauscher (6) und den zirkulierenden Lüfter (5), in einem Luftstromkanalfluid aufgenommen, der zwischen Lufteinlasslochungen (2) und einer Luftabblaseöffnung (3) verbunden ist, wobei beide in dem Innenraumeinheitsgehäuse (1) definiert sind; und
eine Staubsammeleinheit, die in dem Innenraumeinheitsgehäuse (1) angeordnet ist, um Staubpartikel zu sammeln, die aus dem Luftfilter entfernt worden sind;
**dadurch gekennzeichnet, dass**
der Luftfilter in zwei Filterelemente (4A, 4B, 204A, 204B) in eine Richtung, die mit einer Bewegungsrichtung davon übereinstimmt, geteilt ist und dass die zwei Filterelemente (4A, 4B, 204A, 204B) wechselseitig über die Staubsammeleinheit geführt werden, sodass der eine Filter senkrecht oder waagerecht beweglich ist, während der andere Filter in eine Richtung beweglich ist, die der Bewegungsrichtung des einen Filters entgegengesetzt ist.

2. Klimaanlage nach Anspruch 1, ferner einen Staubausstoßlüfter (114, 214), angeordnet in dem Innenraumeinheitsgehäuse (1), umfassend, wobei die Staubsammeleinheit und der Staubausstoßlüfter (114,214) ein Staubentfernungsmittel (111, 211) darstellen.

3. Klimaanlage nach Anspruch 2, wobei die Staubsammeleinheit ein länglicher Staubsammelbehälter (113, 213) ist, der sich in eine Richtung senkrecht zu der Bewegungsrichtung der Filterelemente (4A, 413₁, 204A, 20413) erstreckt und einen Lufttransportkanal aufweist, darin definiert zum Transportieren der Staubpartikel zusammen mit einer Luftströmung, die in eine Längsrichtung davon strömt.

4. Klimaanlage nach Anspruch 2, wobei die Staubsammeleinheit und der Staubausstoßlüfter (114, 214) miteinander in Verbindung stehen.

5. Klimaanlage nach einem der Ansprüche 1 bis 4, wobei die Staubsammeleinheit ein Staubteilungselement (118A, 1188) umfasst, um Staubpartikel von dem Luftfilter zu trennen, und dass das Staubteilungselement (118A, 118B) in einem Abschnitt der Staubsammeleinheit angeordnet ist, durch den die Luftfilter passieren.

6. Klimaanlage nach Anspruch 5, wobei die Staubsammeleinheit eine Öffnung hat, die an einer Stelle neben einem Ende davon gegenüber einer Verbindung mit dem Staubausstoßlüfter (114, 214) bezogen auf eine Längsrichtung davon, definiert ist.

7. Klimaanlage nach Anspruch 5, ferner mehrere Verschließelemente (123) umfassend, wobei die Staubsammeleinheit mehrere Durchgangsschlitze (117) hat, durch die die Filterelemente (4A, 413; 204A, 204B) passieren, und wobei die mehreren Verschließelemente (123) die jeweiligen Durchgangsschlitze (117) beim Ausstoßen der Staubpartikel verschließen.

8. Klimaanlage nach einem der Ansprüche 1 bis 4, wobei die Staubsammeleinheit eine Staubsaugöffnung (217) hat, die zu den Filterelementen (4A, 413; 204A, 20413) hin geöffnet ist, um Staubpartikel anzusaugen.

## Revendications

1. Climatiseur ayant une unité intérieure, qui comprend un boîtier d'unité intérieure (1) contenant un échangeur de chaleur (6) et un ventilateur brasseur d'air (5) pour souffler de l'air ayant subi un échange de chaleur au moyen de l'échangeur de chaleur (6) dans une pièce d'habitation, ledit climatiseur comprenant :
un filtre à air, l'échangeur de chaleur (6) et le ventilateur brasseur d'air (5) contenus dans un passage de flux d'air en liaison fluidique entre des perforations d'admission d'air (2) et une ouverture d'évacuation d'air (3), les deux étant définis dans le boîtier d'unité intérieure (1) ; et
une unité de collecte de poussière disposée dans le boîtier d'unité intérieure (1) pour collecter des particules de poussière éliminées du filtre à air ;
**caractérisé en ce que** :
le filtre à air est divisé en deux éléments de filtrage (4A, 4B, 204A, 204B) dans une direction conforme à une direction de mouvement de ceux-ci, et on fait passer les deux éléments de filtrage (4A, 4B, 204A, 204B) selon un mouvement de va-et-vient sur l'unité de collecte de poussière de sorte que le premier filtre soit mobile verticalement ou horizontalement alors que l'autre filtre est mobile dans une direction opposée à la direction de mouvement du filtre.

2. Climatiseur selon la revendication 1, comprenant en outre un ventilateur d'évacuation de poussière (114, 214) disposé à l'intérieur du boîtier d'unité intérieure (1), dans lequel l'unité de collecte de poussière et le ventilateur d'évacuation de poussière (114, 214) constituent un moyen d'élimination de poussière (111, 211).

3. Climatiseur selon la revendication 2, dans lequel l'unité de collecte de poussière est un réceptacle de collecte de poussière allongé (113, 213) qui s'étend dans une direction perpendiculaire à la direction de mouvement des éléments de filtrage (4A, 413₁, 204A, 20413) et ayant un passage d'acheminement d'air défini dans celui-ci pour acheminer des particules de poussière avec un courant d'air circulant dans le sens de sa longueur.

4. Climatiseur selon la revendication 2, dans lequel l'unité de collecte de poussière et le ventilateur d'évacuation de poussière (114, 214) communiquent l'un avec l'autre.

5. Climatiseur selon l'une quelconque des revendications 1 à 4, dans lequel l'unité de collecte de poussière comprend un élément de séparation de poussière (118A, 1188) pour séparer les particules de poussière du filtre à air, l'élément de séparation de poussière (118A, 118B) étant disposé dans une partie de l'unité de collecte de poussière où le filtre à air passe.

6. Climatiseur selon la revendication 5, dans lequel l'unité de collecte de poussière a une ouverture définie à un emplacement adjacent à une extrémité de celui-ci opposée à une jonction avec le ventilateur d'évacuation de poussière (114, 214) par rapport à une direction longitudinale de celui-ci.

7. Climatiseur selon la revendication 5, comprenant en outre une pluralité d'éléments de fermeture (123), dans lequel l'unité de collecte de poussière a une pluralité de fentes de transit (117) à travers lesquelles les éléments de filtrage (4A, 413 ; 204A, 204B) passent, et la pluralité d'éléments de fermeture (123) ferment les fentes de transit (117) respectives durant l'évacuation des particules de poussière.

8. Climatiseur selon l'une quelconque des revendications 1 à 4, dans lequel l'unité de collecte de poussière a un orifice d'aspiration de poussière (217) ouvert en direction des éléments de filtrage (4A, 413 ; 204A, 20413) pour aspirer les particules de poussière.
